# EUROPÄISCHE PATENTSCHRIFT

(11) **EP 0 635 731 B1**
(45) Veröffentlichungstag und Bekanntmachung des Hinweises auf die Patenterteilung: **23.12.1998**
(21) Anmeldenummer: 94109743.8
(22) Anmeldetag: 23.06.1994
(51) Int. Cl.: G01S 17/88, G01S 7/48, G01S 17/87

(54) **Verfahren zum Bestimmen der Sichtweite bei dichtem Nebel sowie Sichtweitensensor**
Method for determining visibility distance in thick fog and visibility sensor
Méthode et capteur pour déterminer la limite de visibilité dans le brouillard épais

(30) Priorität: 20.07.1993 DE 4324308
(43) Veröffentlichungstag der Anmeldung: 25.01.1995
(73) Patentinhaber: Bayerische Motoren Werke Aktiengesellschaft, 80788 München (DE); Deutsches Zentrum für Luft- und Raumfahrt e.V., 53175 Bonn (DE)
(72) Erfinder: Hahn, Wolfgang, Dipl.-Phys., D-85247 Arnbach (DE); Maier, Dietmar, Dipl.-Ing., D-85238 Petershausen (DE); Werner, Christian, Dr., D-81243 München (DE); Krichbaumer, Wilhelm, Dipl.-Math., D-81677 München (DE); Streicher, Jürgen, D-80337 München (DE)
(74) Vertreter: Viering, Jentschura & Partner

(56) Entgegenhaltungen:
- CA-A- 2 053 758
- GB-A- 2 131 642
- GB-A- 2 224 175
- US-A- 4 479 053

## Beschreibung

Die Erfindung betrifft ein Verfahren zum Bestimmen der Sichtweite bei dichtem Nebel nach dem Anspruch 1, sowie Sichtweitensensoren nach den Ansprüchen 10 und 11.

Die Auswertung von Lidar-Signalen zur Messung von Entfernungen von Körpern ist seit langem bekannt. Dabei wird ein gepulster Laserstrahl ausgesendet und wieder empfangen, wobei der Sendekanal und Empfangskanal herkömmlicherweise parallel zueinander verlaufen. Durch Messung der Laufzeit des Lichts kann die Entfernung eines Objekts, d.h. eines sogenannten lichtundurchlässigen Hard-Targets, von dem Sensor gemessen werden. Dies findet beispielsweise in der Erprobung Anwendung als Fahrzeug-Sicherheitssystem, wobei aus Sicherheitsgründen beispielsweise leichte Eingriffe in die Bremse oder die Kraftstoffzufuhr bei einem nahenden Hindernis erfolgen können. Derartige Sicherheitssysteme machen es jedoch erforderlich, daß das System selbständig erkennen kann, ob es sich um Nebel oder ein festes Hindernis, das sogenannte Hard-Target, handelt.

Weiter ist es bereits bekannt, Lidar-Geräte für die Ermittlung der Sichtweite im Nebel zu verwenden, wozu ein Signal des rückgestreuten Laserlichts analysiert wird.

Liegt jedoch kein sogenanntes Hard-Target vor, sondern Nebel, so tritt eine Streuung des Lichts auf, die einerseits von der Art des Nebels und andererseits von der Stärke des Nebels abhängt. Bei einer gewissen Nebelstärke tritt Mehrfachstreuung auf, d. h. ein Lichtstrahl, der auf ein Nebeltröpfchen auftrifft, wird zum einen Teil direkt zu dem Empfänger zurückreflektiert, zum anderen Teil trifft dieses Streulicht auf weitere Nebeltröpfchen auf, von wo aus es erst zu dem Empfänger zurückreflektiert wird. Der Empfänger empfängt also bei parallel zueinander ausgerichtetem Sende- und Empfangskanal eine Kombination von mehrfach und einfach gestreutem Licht.

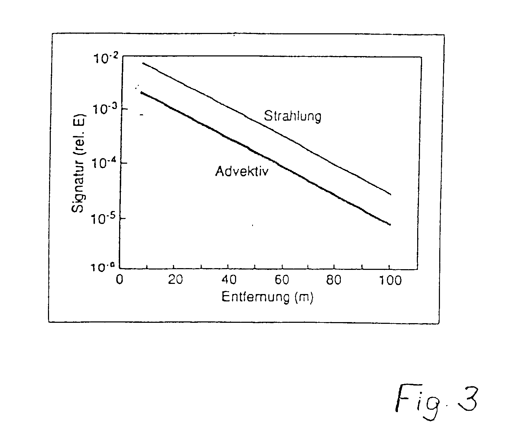

Ein Maß für die Sichtweite ist die sogenannte Signatur in Abhängigkeit von der Entfernung, wobei gilt, daß σ = ln (Lidar- Signal x R²) ist. Dabei ist "R" die Entfernung, welche das Laserlicht zurücklegt, und wird durch Messen der Laufzeit des Lichtimpulses zwischen dem Sender und dem Empfänger ermittelt. Die Entfernung "R" ist aufgrund der konstanten Lichtgeschwindigkeit direkt proportional zu der Laufzeit des Lichtimpulses. Es kann also die Signatur in Abhängigkeit von der Laufzeit bzw. von der Entfernung berechnet werden, wobei diese Kurve einer Geradengleichung der allgemeinen Formel σ = ax + b genügt, wenn in einem Koordinatensystem auf der x-Achse die Entfernung "R" linear aufgetragen wird und auf der y-Achse die Signatur σ logarithmisch aufgetragen wird. Die Steigung "a" ist hierbei der Extinktionskoeffizient, welcher als direktes Maß für die Sichtweite verwendet werden kann (vergleiche hierzu Fig. 3).

Mit den herkömmlichen Verfahren war jedoch keine vernünftige Auswertung des Lidar-Signals zum Berechnen des Extinktionskoeffizienten möglich, weil das mehrfach gestreute Licht einen längeren Weg zurücklegen muß, um wieder zurück zu dem Empfänger zu gelangen, und damit eine längere Laufzeit hat (Impulsverlängerung) und schon aus diesem Grund nicht vernünftig ausgewertet werden kann.

Noch wesentlicher, warum eine genaue Auswertung gemäß dem Stand der Technik nicht möglich war, ist es jedoch, daß die logarithmisch über der linear aufgetragenen Entfernung aufgetragene Signatur beim Auftreten von Mehrfachstreuung eine flachere Steigung aufweist, wodurch ein geringerer Extinktionskoeffizient und damit eine größere Sichtweite vorgetäuscht werden. Darüber hinaus ist dieser Unterschied im Extinktionskoeffizienten stark von der Nebelart abhängig.

Die herkömmlichen Verfahren zur Bestimmung der Sichtweite sind also nur bei Einfachstreuung ausreichend genau, während bei Mehrfachstreuung, d.h. bei Sichtweiten unterhalb von 300 m, eine befriedigende Ermittlung der Sichtweite aufgrund der oben beschriebenen Signalverfälschung wegen der Mehrfachstreuung nicht möglich ist, wobei die Stärke der Signalverfälschung und des bei gleicher Sichtweite zurückgestreuten Lichts überdies von der Nebelart abhängig ist.

Der Extinktionskoeffizient kann also nur bei Einfachstreuung unabhängig von der Nebelart mittels herkömmlicher Verfahren ermittelt werden, also unabhängig davon, ob beispielsweise Strahlungsnebel oder advektiver Nebel herrscht. Bei Mehrfachstreuung ändert sich in Abhängigkeit von der Nebelart das Verhältnis von Zweifachstreuung zu Einfachstreuung, d.h. bei advektivem Nebel ist dieses Verhältnis größer als bei Strahlungsnebel. Dieses Verhältnis zwischen Einfachstreuung und Zweifachstreuung ist jedoch bei herkömmlichen Verfahren nicht ermittelbar, da hierbei von dem Empfänger stets nur eine Summe von einfach und zweifach gestreutem Licht empfangen wird.

Aus der CA-A-2 053 758 ist weiter ein Lidar-System mit koaxialer Anordnung bekannt, wobei mehrere Emfangskanäle in Form von einander konzentrischen Kegeln vorgesehen sind, wovon wenigstens der innerste der Empfangskanäle einen solch engen Öffnungswinkel aufweist, beispielsweise von 7,5 mrad, daß so gut wie ausschließlich einfach rückgestreutes Licht empfangen wird. Mittels dieses Lidar-Systems soll bei Flugzeugen ermittelt werden, ob ausreichende Sicht zum Boden für eine manuelle Landung gegeben ist.

Es ist daher eine Aufgabe der Erfindung, einen Sichtweitensensor und ein Verfahren der eingangs erwähnten Art zum Bestimmen der Sichtweite bei dichtem Nebel zu schaffen, wobei unabhängig von der Nebelart und unabhängig von der zu ermittelnden Sichtweite eine genaue Ermittlung der Sichtweite möglich ist.

Dies wird durch ein erfindungsgemäßes Verfahren gemäß dem kennzeichnenden Teil des Anspruchs 1 erreicht, und durch die erfindungsgemäßen Vorrichtungen gemäß der Ansprüche 10 und 11 erreicht. Vorteilhafte Weiterbildungen sind in den Unteransprüchen beschrieben.

Die Sende- und die Empfangskanäle verlaufen nebeneinander und im Abstand zueinander, weil der bzw. die Sender und die Empfänger nebeneinander oder übereinander angeordnet sind. Der spitze Kippwinkel zwischen den Empfangskanälen und den jeweils zugehörigen Sendekanälen ist so bemessen, daß in den Empfangskanälen vorwiegend mehrfach gestreutes Licht empfangen wird, insbesondere zweifach gestreutes Licht. Der Anteil des in den Empfangskanälen empfangenen zweifach gestreuten Lichts kann beispielsweise 95% betragen. Unter dem Kippwinkel ist derjenige Winkel zu verstehen, welcher von einer gedachten Verlängerung eines jeweiligen gekippten Empfangskanals und des jeweils zugehörigen Sendekanals eingeschlossen wird. Die Kippwinkel sind relativ klein und können beispielsweise 0,33 ° betragen. Die Kippwinkel werden dahingehend optimiert, daß sie so groß sind, daß gerade eben gar kein oder nur ein relativ kleiner Anteil an einfach gestreutem Licht durch den gekippten Empfangskanal empfangen wird, während die Intensität des zweifach- und mehr als zweifach gestreuten Lichts hoch ist. Bei einem derart optimierten Kippwinkel wird überwiegend zweifach gestreutes Licht empfangen. Je größer der Kippwinkel gewählt wird, um so kleiner wird die insgesamt empfangene Lichtintensität, während der Anteil an mehr als zweifach gestreutem Licht zunimmt. Damit nimmt einerseits in unerwünschter Weise die Impulsbreite zu, wodurch die Auswertung schwieriger ist, und zum anderen ist die Auswertung aufgrund der geringen Lichtintensität des empfangenen Lichts ungenauer.

Gemäß einer vorteilhaften Weiterbildung des erfindungsgemäßen Verfahrens wird mittels eines Auswertungsverfahrens aus den empfangenen Lidar-Signalen auf die Extinktion zurückgerechnet, wozu ein Verhältnis zwischen dem durch den ersten Empfangskanal empfangenen Lidar-Signal zu dem durch den zweiten Empfangskanal empfangenen Lidar-Signal gebildet wird und dadurch ein Verhältnis zwischen der Summe der Intensität des gesamten zurückgestreuten Lichts und des mehr als einfach gestreuten Lichts gebildet wird.

Durch die Erfindung wird erreicht, daß durch den parallelen Empfangskanal eine Summe aus einfach und mehrfach gestreutem Licht empfangen wird, während in dem "gekippten" Empfangskanal vorwiegend, beispielsweise zu 90% oder zu 95% und mehr, zwei- und mehrfach gestreutes Licht empfangen wird. Wie weiter unten noch näher erläutert wird, läßt sich aufgrund eines Verhältnisses zwischen der Intensität des durch den parallelen Empfangskanal empfangenen Lichts zu der Intensität des durch den gekippten Empfangskanal empfangenen Lichts die Nebelart ermitteln und dann mit einem an diese Nebelart angepaßten Auswertungsverfahren die Sichtweite bestimmen.

Gemäß einer vorteilhaften Weiterbildung kann ein zweiter Sendekanal vorgesehen sein, welcher parallel zu dem ersten Sendekanal ausgerichtet ist. Bei zwei Sendekanälen und zwei Empfangskanälen ist jedem Sendekanal genau ein Empfangskanal zugeordnet.

Gemäß einer anderen vorteilhaften Weiterbildung ist ein dritter Empfangskanal vorgesehen, welcher parallel und achsensymmetrisch bezogen auf den ersten Sendekanal bzw. eine in der Mitte zwischen den beiden Sendekanälen verlaufende gedachte Linie ausgerichtet ist, wobei durch den ersten Empfangskanal nur rückgestreutes Licht mit einer ersten Polarisationsebene empfangen wird, während durch den dritten Empfangskanal nur rückgestreutes Licht mit einer zweiten Polarisationsebene empfangen wird, welche senkrecht zu der ersten Polarisationsebene verläuft. Weiter kann vorteilhaft ein vierter Empfangskanal vorgesehen sein, welcher achsensymmetrisch zu dem zweiten Empfangskanal bezogen auf den ersten Sendekanal bzw. eine in der Mitte zwischen den beiden Sendekanälen verlaufende gedachte Linie ausgerichtet ist. Weiter können vorteilhaft ein dritter und ein vierter Sendekanal vorgesehen sein, wobei jeweils einer der Sendekanäle einem der Empfangskanäle zugeordnet ist.

Mit anderen Worten können beliebig viele Sende- und Empfangskanäle vorgesehen sein, wobei nicht notwendigerweise jedem Empfangskanal auch ein eigener Sendekanal zugeordnet sein muß. Einem Sendekanal können auch mehrere Empfangskanäle mittels eines Multiplexers zugeordnet werden.

Im Fall von vier Empfangskanälen wird mittels einer vorteilhaften Weiterbildung des erfindungsgemäßen Verfahrens mittels eines Auswertungsverfahrens aus den empfangenen Lidar-Signalen auf die Extinktion zurückgerechnet, wozu ein Verhältnis zwischen dem Wert des durch den ersten Empfangskanal empfangenen Lidar-Signals zu dem Wert des durch den zweiten Empfangskanal empfangenen Lidar-Signals gebildet wird und ein Verhältnis zwischen dem Wert des durch den dritten Empfangskanal empfangenen Lidar-Signals zu dem Wert des durch den vierten Empfangskanal empfangenen Lidar-Signals gebildet wird.

Gemäß einer anderen vorteilhaften Weiterbildung der Erfindung wird aufgrund eines Vergleichs der Werte der empfangenen Lidar-Signale zwischen dem ersten und dritten und dem zweiten und vierten Empfangskanal die Polarisationsebene des zurückgestreuten Lichts erfaßt und es erfolgen damit Rückschlüsse auf die Art des streuenden Mediums, d.h. des Aerosols. Unter Aerosol ist jede Art von streuendem Medium zu verstehen wie beispielsweise Nebel, Eisnebel, Rauch, Staub oder ein Gemisch davon.

Aufgrund der Auswertung des empfangenen Lichts hinsichtlich einer Depolarisation zwischen dem Sender und dem Empfänger lassen sich weitere Informationen über die Art des Nebels erlangen. Es ist so möglich, eine Vorauswahl zum Bestimmen der Nebelart zu treffen und dann ein für die betreffende Nebelart passendes Auswertungsverfahren zu wählen.

Bei der erfindungsgemäßen Vorrichtung ist der spitze Kippwinkel zwischen dem ersten und zweiten Empfangskanal so bemessen, daß von dem zweiten Empfänger zu über 90% zweifach gestreutes Licht empfangen wird.

Wenn bei der erfindungsgemäßen Vorrichtung nicht jedem Empfänger ein Sender fest zugeordnet ist, so kann vorteilhaft ein Sender mittels eines Multiplexers alternierend mehreren Empfängern zugeordnet werden, welche alternierend die jeweiligen einzelnen Empfänger auf Empfangsbereitschaft schalten.

Gemäß einer vorteilhaften Ausführungsform sind jedoch ein zweiter, durch einen zweiten Sendekanal sendender Sender, sowie ein dritter und ein vierter Empfänger vorgesehen, welche durch einen dritten bzw. einen vierten Empfangskanal rückgestreutes Licht empfangen, wobei die Sender und Empfänger so angeordnet sind, daß der erste und der zweite Sendekanal, der erste und der dritte Empfangskanal sowie der zweite und der vierte Sendekanal achsensymmetrisch zueinander angeordnet sind. Weiter können gemäß einer vorteilhaften Weiterbildung die Empfänger mit so ausgerichteten Polarisationsfiltern versehen sein, daß der erste und dritte Empfänger nur Licht mit einer horizontalen Polarisationsebene und der zweite und der vierte Empfänger nur Licht mit einer vertikalen Polarisationsebene oder umgekehrt empfangen, wobei die Sender jeweils linear polarisiertes Licht mit einer definierten Polarisationsebene senden.

Dadurch, daß gemäß der vorgenannten, vorteilhaften Weiterbildung der Erfindung die Polarisationsebene des gesendeten, linear polarisierten Lichts bekannt ist, und die Polaritätsebene des empfangenen, linear polarisierten Lichts ermittelt werden kann, läßt sich die Stärke der Depolarisation ermitteln und damit sind Rückschlüsse auf die Nebelart möglich. Es ist jedoch auch jede beliebige andere Polarisationsebene der jeweiligen Polarisationsfilter möglich, beispielsweise daß beide Polarisationsebenen in einem Winkel von +45° bzw -45° zu der Vertikalen oder Horizontalen angeordnet sind, oder auch daß die beiden Polarisationsebenen nicht senkrecht aufeinander stehen, sondern nur einen Winkel miteinander einschließen, wodurch sich jedoch die Berechnung der Polarisationsebene des empfangenen, rückgestreuten Lichts unnötig verkompliziert.

Vorteilhaft weist jeder Sender eine Laserdiode auf, welche monochromatisches Licht mit einer Pulsfrequenz des Lasers von 10 ... 50 Khz aussendet. Als Faustregel sollte die Wellenlänge des ausgesendeten Laserlichts im Bereich der Größe der Nebelteilchen liegen. Die Pulsfrequenz sollte aus dem Grund möglichst groß sein, daß eine große Anzahl von auswertbaren Impulsen pro Zeiteinheit empfangen wird, so daß auch bei einer niedrigen Lichtleistung (diese darf aus Sicherheitsgründen bei Laserlicht nicht zu groß sein) aufgrund der hohen Anzahl der auswertbaren Impulse eine hohe Meßgenauigkeit erzielt wird.

Als Beispiel kann der Sender Laserlicht mit einer Impulslänge von 40 ns, einer Leistung vom 0,006 mJ, einer Wellenlänge von 860 nm, einer Divergenz von 5 mrad sowie einem Durchmesser des Lichtstrahls von 4 cm aussenden.

Die Erfindung wird nachfolgend anhand eines bevorzugten Ausführungsbeispiels unter Bezugnahme auf die Zeichnung erläutert. In der Zeichnung zeigen:
Fig. 1 eine schematische Darstellung der Anordnung der Sende- und Empfangskanäle gemäß einer vorteilhaften Ausführungsform;
Fig. 2 eine Schnittdarstellung der Anordnung der Sende- und Empfangskanäle gemäß der in Fig. 1 gezeigten vorteilhaften Ausführungsform;
Fig. 3 ein Diagramm für verschiedene Nebelarten der logarithmisch über der linear aufgetragenen Entfernung aufgetragenen Signatur unter der Annahme einer großen Sichtweite, bei welcher nur Einfachstreuung auftritt;
Fig. 4 ein Diagramm, welches das Verhältnis des zweifach gestreuten, empfangenen Lichts zu dem einfach gestreuten, empfangenen Licht in Abhängigkeit von der Entfernung für verschiedene Nebelarten zeigt;
Fig. 5 ein erstes Auswertungsverfahren zur Bestimmung der Sichtweite;
Fig. 6 ein zweites Auswertungsverfahren zur Bestimmung der Sichtweite, wobei aufgrund der Depolarisation des Lichts zwischen dem Sender und dem Empfänger eine Vorauswahl über die Nebelart getroffen wird;
Fig. 7 ein Expertensystem, mittels welchem noch weitere Informationen für die Ermittlung der Nebelart und die weitere Auswertung hinzugezogen werden.

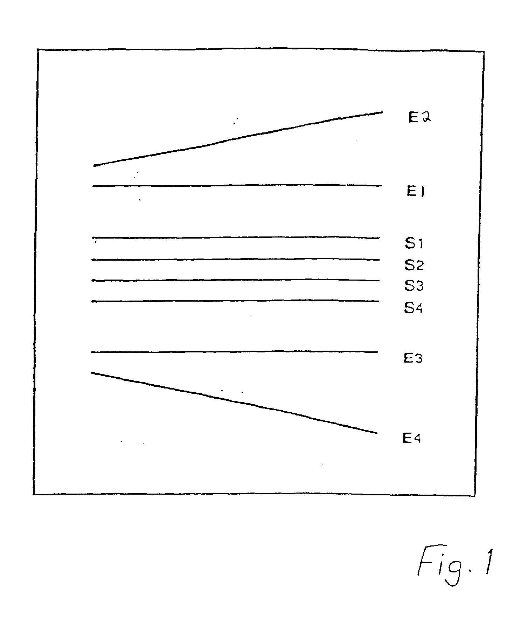

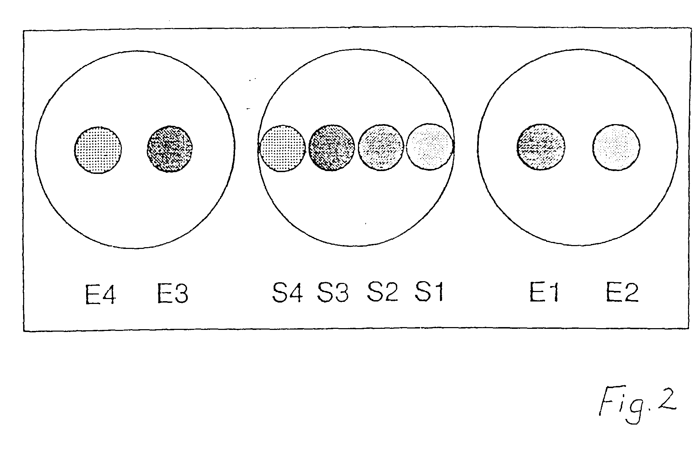

Fig. 1 und Fig. 2 zeigen schematische Darstellungen eines Ausführungsbeispiels eines Sichtweitensensors, wobei vier Sendekanäle und vier Empfangskanäle vorgesehen sind. Unter Sende- und Empfangskanälen werden hier sich räumlich erstreckende, gedachte Kanäle verstanden, durch welche Laserlicht gesendet bzw. empfangen wird. Die entsprechenden Sender und Empfänger und damit auch die jeweiligen Sende- und Empfangskanäle sind im Abstand zueinander angeordnet. Die Sende- und Empfangskanäle verlaufen parallel zueinander bzw. ein "gekippter" Empfangskanal E1 bzw. E4 unter einer leichten Divergenz von beispielsweise 0,33° zu dem jeweiligen Sendekanal S1 bzw. S4. Diese Divergenzwinkel werden als sogenannte Kippwinkel bezeichnet und sind in der Figur 1 diejenigen Winkel, die zwischen dem Sendekanal S1 und dem Empfangskanal E1 bzw. zwischen dem Sendekanal S4 und dem Empfangskanal E4 eingeschlossen werden.

Die Sendekanäle S1 bis S4 verlaufen parallel zueinander, die Empfangskanäle E1 und E3 verlaufen parallel zu den Sendekanälen S1 bis S4, während die Empfangskanäle E2 und E4 zu den Sendekanälen S1 bis S4 gekippt verlaufen, d.h. mit diesen einen spitzen Kippwinkel einschließen. Jedem Empfangskanal E1 bis E4 ist gemäß diesem Ausführungsbeispiel ein spezieller der Sendekanäle S1 bis S4 zugeordnet, durch welche von einem Sender gepulstes Laserlicht gesendet wird. Hierzu ist sind die Sender üblicherweise jeweils mit einer Laserdiode versehen.

Am Ende der Empfangskanäle sind die Empfänger angeordnet, welche das Laserlicht empfangen. Dabei wird jeweils die Laufzeit eines Lichtimpulses und die Intensität des empfangenen Lichts gemessen.

Der spitze Kippwinkel zwischen den Empfangskanälen E2, E4 und den jeweils zugehörigen Sendekanälen S2, S4 ist so bemessen, daß in den Empfangskanälen E2 und E4 vorwiegend mehrfach gestreutes Licht empfangen wird, insbesondere zweifach gestreutes Licht. Der Anteil des in den Empfangskanälen E2 und E4 empfangenen zweifach gestreuten Lichts kann beispielsweise 95% betragen. Die Kippwinkel sind relativ klein und können beispielsweise 0,33 ° betragen. Die Kippwinkel werden dahingehend optimiert, daß sie so groß sind, daß gerade eben gar kein oder nur ein verschwindend kleiner Anteil an einfach gestreutem Licht durch den gekippten Empfangskanal empfangen wird, während die Intensität des zweifach- und mehr als zweifach gestreuten Lichts hoch ist. Bei einem derart optimierten Kippwinkel wird überwiegend zweifach gestreutes Licht empfangen. Je größer der Kippwinkel gewählt wird, um so kleiner wird die insgesamt empfangene Lichtintensität, während der Anteil an mehr als zweifach gestreutem Licht zunimmt. Damit nimmt einerseits in unerwünschter Weise die Impulsbreite zu, wodurch die Auswertung schwieriger ist, und zum anderen ist die Auswertung aufgrund der geringen Lichtintensität des empfangenen Lichts ungenauer.

Die Empfangskanäle E1 und E2 empfangen nur horizontal polarisiertes Licht, während die Empfangskanäle E3 und E4 nur vertikal polarisiertes Licht empfangen.

Wie bereits eingangs erwähnt wurde, wurde bereits im Stand der Technik versucht, von der Rückstreuung auf die Sichtweite zu schließen. Wie jedoch eingangs bereits erläutert, war dies jedoch nur bei relativ großen Sichtweiten von über 200 m mit einiger Genauigkeit möglich, weil bei diesen Sichtweiten vorwiegend Einfachstreuung auftritt.

In Fig. 3 ist anhand eines Beispiels für Einfachstreuung ein Diagramm für zwei verschiedene Nebelarten gezeigt, nämlich für Strahlungsnebel und advektiven Nebel, wobei die Signatur über der Entfernung aufgetragen ist. Ein direktes Maß für die Extinktion und damit die Sichtweite ist wie bereits oben erläutert der Extinktionskoeffizient, welcher die Steigung der Geradenfunktion der logarithmisch aufgetragenen Signatur als Funktion der linear aufgetragenen Entfernung σ = f(R) ist.

Unter der "Entfernung" ist die zurückgelegte Wegstrecke des Laserlichtimpulses zu verstehen. Wie aus Fig. 3 ersichtlich ist, unterscheidet sich die Steigung, welche ein direktes Maß für die Sichtweite ist, im Falle der Einfachstreuung für beide Nebelarten nicht, so daß bei Einfachstreuung die Sichtweite unabhängig von der Nebelart zuverlässig ermittelt werden kann, obgleich, wie Fig. 3 auch zeigt, der Absolutwert der aus der obigen Gleichung σ = ln (Lidar-Signal x R²) berechnete Signatur aufgrund einer von der Nebelart abhängigen, unterschiedlich starken Rückstreuung unterschiedlich groß ist.

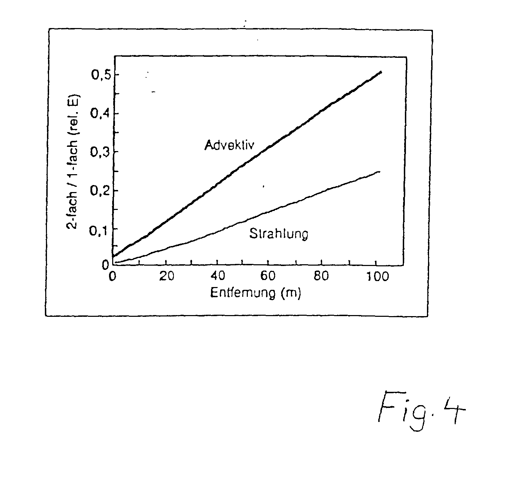

Tritt jedoch Mehrfachstreuung auf, so ist die Steigung der obigen Kurve σ = f(R) aufgrund der auftretenden Mehrfachstreuung flacher und damit wird ein bessere Sichtweite vorgetäuscht. Dabei ist das Verhältnis der Intensitäten des empfangenen, zweifach gestreuten Lichts zu dem einfach gestreuten Licht in hohem Maß von der Nebelart abhängig und damit wird in Abhängigkeit von der Nebelart im unterschiedlich starkem Maß eine bessere Sichtweite vorgetäuscht. Fig. 4 zeigt das Verhältnis der Intensitäten von zweifach gestreutem Licht zu einfach gestreutem Licht anhand eines Beispiels für Strahlungsnebel und advektiven Nebel.

Der Grundgedanke ist also der, daß aufgrund des Verhältnisses von Zweifach- zu Einfachstreuung Rückschlüsse auf die Nebelart erfolgen können und in Kombination mit der Intensität des empfangenen, rückgestreuten Lichts schließlich die Sichtweite ermittelt werden kann.

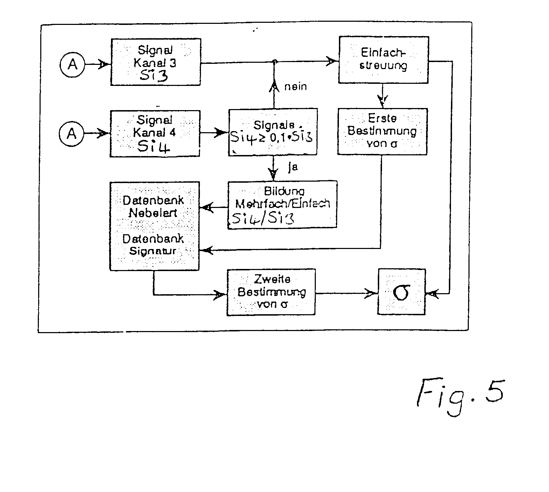

Aufgrund der Rückschlüsse auf die Nebelart kann ein Auswertungsverfahren verwendet werden, wie er in Fig. 5 gezeigt ist. Dazu wird das Signal von dem Empfangskanal E3 verwendet, durch welchen eine Summe aus einfach und mehrfach gestreutem Licht empfangen wird, und das Signal von dem Empfangskanal E4 verwendet, durch welchen nur mehrfach gestreutes Licht, hauptsächlich zweifach gestreutes Licht, empfangen wird.

Ist die Zweifachstreuung und Mehrfachstreuung höherer Ordnung zu vernachlässigen, so wird die Sichtweite aus der Einfachstreuung ermittelt. Dies ist laut dem Auswertungsverfahren gemäß Fig. 5 dann der Fall, wenn das Signal von dem Empfangskanal S4 kleiner als 10% des Signals von dem Empfangskanal S3 ist.

Anderenfalls, d.h. bei nicht zu vernachlässigender Mehrfachstreuung, wird das Verhältnis des Signals von dem Empfangskanal S4 zu dem Signal von dem Empfangskanal S3 gebildet, wonach aufgrund einer Datenbank auf die Nebelart geschlossen wird. Unter Voraussetzung der Annahme von ausschließlicher Einfachstreuung erfolgt eine erste Bestimmung der Signatur σ, woraufhin dann mittels einer Datenbank und aufgrund der ersten Bestimmung von σ in Kombination mit der bereits bestimmten Nebelart der tatsächliche Wert von σ ermittelt wird. Mit anderen Worten werden das Verhältnis des Signals von dem Empfangskanal S4 zu dem Signal von dem Empfangskanal S3 und der erste, sozusagen vorläufig bestimmte Wert von σ (und damit die Sichtweite) einer Datenbank zugeführt und mittels einer Iteration wird die zweite und endgültige Bestimmung der Sichtweite vorgenommen.

Im Einzelnen kann das vorgenannte Auswertungsverfahren so gestaltet sein, daß wenn gilt daß:
A = Intensität des durch den Empfangskanal E3 empfangenen einfach gestreuten Lichts;
B = Intensität des durch den Empfangskanal E3 empfangenen zweifach gestreuten Lichts;
C = Intensität des durch den Empfangskanal E4 empfangenen zweifach gestreuten Lichts; und
R = Entfernung, d.h. von dem Lichtimpuls zwischen Sender und Empfänger zurückgelegte Wegstrecke ist,
sich aus diesen gemessenen Werten C•R und(A+B)•R•R bestimmen lassen.

Weiter können theoretisch A,B,C berechnet werden, woraus sich (A+B), C•R und (A+B)•R•R ableiten lassen.

Aus dem Signal Si3 aufgrund des durch den dritten Empfangskanal E3 zurückgestreuten Lichts, d.h. aufgrund von (A+B), läßt sich auf einen Rückstreuwert schließen, während sich aus dem Signal Si4 aufgrund des durch den vierten Empfangskanal E4 zurückgestreuten Lichts, d.h. aufgrund von C, auf den Grad der Zweifachstreuung schließen läßt. Es zeigt sich auch aus Berechnungen, daß für den Fall, daß C/(A+B) < 0,2 ist, die Sichtweite mehr als 100 m beträgt. Mit beiden Werten, d.h. mit dem Rückstreuwert und dem Grad der Zweifachstreuung, lassen sich a) die Nebelart und b) die Sichtweite folgern. Mittels einer Tabelle (A, B, C) und den theoretischen Signalen kann eine Meßkurve mit der bestimmten Sichtweite simuliert werden.

Es wird die Funktion [(A+B) - N•C)]•R•R aus den Meßwerten und aus den berechneten Werten gebildet und der Faktor N so lange variiert, bis die Meßwerte und die berechneten Werte übereinstimmen. Daraus erhält man den gewünschten Streukoeffizienten und die Sichtweite.

Es wäre theoretisch denkbar, das Signal Si4 von dem Signal Si3 abzuziehen, wodurch nur die Intensität des nur einfach gestreuten Lichts ermittelt wird. Auf diesen Wert könnte ein herkömmliches Auswertungsverfahren (beispielsweise die bekannte Slope-Methode) angewendet werden. Jedoch können dabei erhebliche, von der Nebelart und der Entfernung abhängige Fehler auftreten, weshalb es erforderlich ist, Aufschluß über die Nebelart zu gewinnen. Dies geschieht wie erwähnt aufgrund der Bildung des Verhältnisses Si4/Si3.

Als weitere Verbesserung des Auswertungsverfahrens können alle Sender durch die einander parallelen Sendekanäle S1 bis S4 Licht mit der gleichen Polarisationsebene aussenden, beispielsweise horizontal polarisiertes Licht, während jeweils ein gekippter Empfänger E2 bzw. E4 nur horizontal polarisiertes Licht und der andere gekippte Empfänger E4 bzw. E2 nur senkrecht polarisiertes Licht empfängt, und einer der parallelen Empfänger E1 bzw. E3 nur horizontal polarisiertes Licht sowie der andere parallele Empfänger E3 bzw. E1 nur vertikal polarisiertes Licht empfängt.

Bei dieser vorteilhaften Weiterbildung erfolgt die Ermittlung der Nebelart zusätzlich aufgrund der Bestimmung der Polarisationsebene des empfangenen Lichts, d.h. aufgrund der Art und Stärke der durch den Nebel erfolgten Depolarisation. Dies ist deshalb möglich, weil bei unterschiedlichen Nebeln eine unterschiedliche Depolarisation erfolgt. Beispielsweise erfolgt bei Eiskristallen eine starke Depolarisation, während bei Wassertröpfchen eine geringe Depolarisation erfolgt. Diese zusätzliche Information über die Depolarisation läßt daher ebenfalls Rückschlüsse auf die Nebelart zu und geht damit auch in die Bemessung der Sichtweite ein.

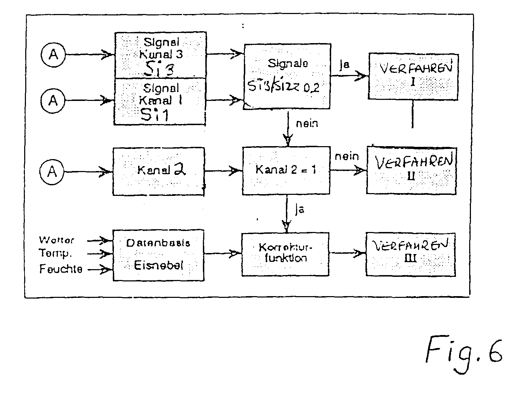

Ein Auswertungsverfahren unter Berücksichtigung der Depolarisationsebene des rückgestreuten Lichts ist in Fig. 6 gezeigt, wobei das Verhältnis von Signalen Si3/Si1 gebildet wird, wobei das Signal Si1 aufgrund des durch den ersten Empfangskanal E1 zurückgestreuten Lichts und das Signal Si3 aufgrund des durch den dritten Empfangskanal E3 zurückgestreuten Lichts gebildet wird, wobei die Polarisationsebenen der beiden Empfänger E1 und E3 aufeinander senkrecht stehen. Ist das Verhältnis kleiner gleich 0,2, d.h. gilt Si3/Si1 ≦ 0,2 , so liegt jedenfalls kein Eisnebel vor und es wird nach einem Verfahren I und einem anschließenden Verfahren II ausgewertet, während anderenfalls, beispielsweise bei Schnee oder sonstigem Niederschlag, nur nach dem Verfahren II ausgewertet wird, sofern nicht gleichzeitig gilt, daß das aufgrund des durch den gekippten Empfangskanal E2 empfangenen Lichts erzeugte Signal Si2 nicht den selben Wert wie das Signal Si1 hat. Wenn jedoch das Signal Si2 den gleichen Wert wie das Signal Si1 hat, würde nämlich Eisnebel vorliegen und mit Hilfe einer Datenbank und aufgrund von zusätzlichen Informationen über das Wetter, die Temperatur und die Feuchtigkeit würde dann mittels einer Korrekturfunktion nach einem Verfahren III ausgewertet werden.

Man könnte also das Auswertungsverfahren unter Berücksichtigung der Depolarisationsebene des rückgestreuten Lichts, wie es in Fig. 6 gezeigt ist, als ein Auswertungsverfahren mit einer Vorauswahl der Nebelarten bezeichnen.

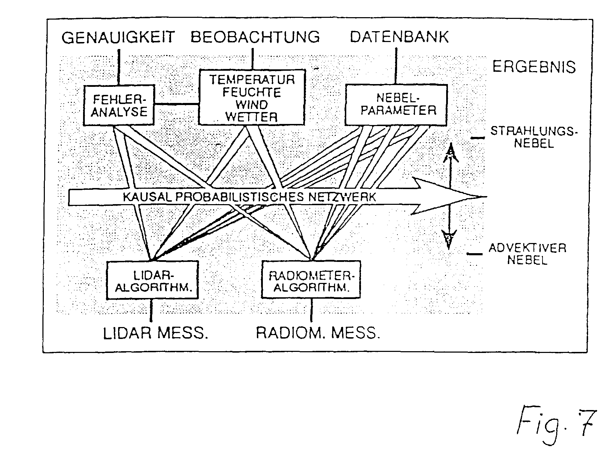

Eine weitere Verbesserung der Auswertung kann noch durch ein Expertensystem erzielt werden, welches noch weitere Informationen nutzt, wie beispielsweise die Fahrtgeschwindigkeit, und entsprechend der jeweiligen Fahrtgeschwindigkeit eine Korrektur vornimmt. Ein solches Expertensystem ist in Fig. 7 dargestellt.

## Patentansprüche

1. Verfahren zum Bestimmen der Sichtweite bei dichtem Aerosol mittels eines Lidars, von welchem durch einen ersten Sendekanal ein gepulster Laserstrahl gesendet wird und durch einen ersten Empfangskanal von dem Nebel rückgestreutes Laserlicht empfangen wird, wobei der erste Sendekanal und der erste Empfangskanal parallel zueinander ausgerichtet sind, dadurch gekennzeichnet, daß von dem Lidar zusätzlich durch einen zweiten Empfangskanal rückgestreutes Laserlicht empfangen wird und dieser zweite Empfangskanal in einem divergenten, spitzen dahingehend optimierten Kippwinkel zu dem ersten Sendekanal ausgerichtet ist, daß das nur ein kleiner Anteil an einfach gestreutem Licht durch den gekippten Empfangskanal empfangen wird, während die Intensität des zweifach- und mehr als zweifach gestreuten Lichts hoch ist.

2. Verfahren nach Anspruch 1, dadurch gekennzeichnet, daß ein zweiter Sendekanal vorgesehen ist, welcher parallel zu dem ersten Sendekanal ausgerichtet ist.

3. Verfahren nach Anspruch 1 oder 2, dadurch gekennzeichnet, daß ein dritter Empfangskanal vorgesehen ist, welcher parallel und achsensymmetrisch bezogen auf den ersten Sendekanal bzw. eine in der Mitte zwischen den beiden Sendekanälen verlaufende gedachte Linie ausgerichtet ist, und durch den ersten Empfangskanal nur rückgestreutes Licht mit einer ersten Polarisationsebene empfangen wird, während durch den dritten Empfangskanal nur rückgestreutes Licht mit einer zweiten Polarisationsebene empfangen wird, welche senkrecht zu der ersten Polarisationsebene verläuft, wobei durch den Sendekanal bzw. die Sendekanäle linear polarisiertes Licht mit einer definierten Polarisationsebene gesendet wird.

4. Verfahren nach Anspruch 3, dadurch gekennzeichnet, daß ein vierter Empfangskanal vorgesehen ist, welcher achsensymmetrisch zu dem zweiten Empfangskanal bezogen auf den ersten Sendekanal bzw. eine in der Mitte zwischen den beiden Sendekanälen verlaufende gedachte Linie ausgerichtet ist.

5. Verfahren nach einem der Ansprüche 2 bis 4, dadurch gekennzeichnet, daß die Sende- und Empfangskanäle mittels eines Multiplexers einander zugeordnet werden.

6. Verfahren nach Anspruch 4, dadurch gekennzeichnet, daß ein dritter und ein vierter Sendekanal vorgesehen sind, wobei jeweils einer der Sendekanäle einem der Empfangskanäle zugeordnet ist.

7. Verfahren nach einem der Ansprüche 1 bis 6, dadurch gekennzeichnet, daß mittels eines Auswertungsverfahrens aus den empfangenen Lidar-Signalen auf die Extinktion zurückgerechnet wird, wozu ein Vergleich zwischen dem durch den ersten Empfangskanal empfangenen Lidar-Signal zu dem durch den zweiten Empfangskanal empfangenen Lidar-Signal gebildet wird und dadurch ein Verhältnis zwischen der Summe der Intensität des gesamten zurückgestreuten Lichts und des zweifachgestreuten Lichts gebildet wird.

8. Verfahren nach Anspruch 4, dadurch gekennzeichnet, daß mittels eines Auswertungsverfahrens aus den empfangenen Lidar-Signalen auf die Extinktion zurückgerechnet wird, wozu ein Verhältnis zwischen dem Wert des durch den ersten Empfangskanal empfangenen Lidar-Signals zu dem Wert des durch den zweiten Empfangskanal empfangenen Lidar-Signals gebildet wird und ein Verhältnis zwischen dem Wert des durch den dritten Empfangskanal empfangenen Lidar-Signals zu dem Wert des durch den vierten Empfangskanal empfangenen Lidar-Signals gebildet wird.

9. Verfahren nach Anspruch 4, dadurch gekennzeichnet, daß aufgrund des Vergleichs der Werte der empfangenen Lidar-Signale zwischen dem ersten und dritten und dem zweiten und vierten Empfangskanal die Polarisationsebene des zurückgestreuten Lichts erfaßt wird und damit Rückschlüsse auf die Art des Nebels erfolgen.

10. Sichtweitensensor, welcher versehen ist mit einem Lidar mit einem ersten, durch einen ersten Sendekanal (S1) sendenden Sender, welcher einen gepulsten Laserstrahl sendet, und einem ersten Empfänger, welcher durch einen ersten Empfangskanal (E1) einfach gestreutes Licht empfängt, wobei der erste Sendekanal (S1) und der erste Empfangskanal (E1) parallel zueinander ausgerichtet sind, dadurch gekennzeichnet, daß zusätzlich ein zweiter Empfänger vorgesehen ist, welcher so ausgerichtet ist, daß er durch einen zweiten Empfangskanal (E2) rückgestreutes Licht empfängt und dieser zweite Empfangskanal (E2) in einem divergenten, spitzen dahingehend optimierten Kippwinkel zu dem ersten Sendekanal (S1) ausgerichtet ist, daß das nur ein kleiner Anteil an einfach gestreutem Licht durch den gekippten Empfangskanal empfangen wird, während die Intensität des zweifach- und mehr als zweifach gestreuten Lichts hoch ist.

11. Sichtweitensensor, welcher versehen ist mit einem Lidar mit einem durch einen Sendekanal (S1) sendenden einzigen Sender, welcher einen gepulsten Laserstrahl sendet, und einem Empfänger, welcher durch einen ersten Empfangskanal (E1) rückgestreutes Licht empfängt, wobei der Sendekanal (S1) und der erste Empfangskanal (E1) parallel zueinander ausgerichtet sind, dadurch gekennzeichnet, daß der Empfänger zwischen der Ausrichtung auf den ersten und den zweiten Empfangskanal (E1, E2) hin- und herbewegbar ist, wobei er bei letztgenannter Ausrichtung durch den zweiten Empfangskanal (E2) rückgestreutes Licht empfängt und dieser zweite Empfangskanal (E2) in einem divergenten, spitzen dahingehend optimierten Kippwinkel zu dem ersten Sendekanal (S1) ausgerichtet ist, daß das nur ein kleiner Anteil an einfach gestreutem Licht durch den gekippten Empfangskanal empfangen wird, während die Intensität des zweifach- und mehr als zweifach gestreuten Lichts hoch ist.

12. Sichtweitensensor nach Anspruch 10 oder 11, dadurch gekennzeichnet, daß der spitze Kippwinkel zwischen dem ersten und zweiten Empfangskanal so bemessen ist, daß von dem zweiten Empfänger zu über 90% zweifach gestreutes Licht empfangen wird.

13. Sichtweitensensor nach Anspruch 10 oder 12, dadurch gekennzeichnet, daß ein Multiplexer vorgesehen ist, mittels welchem alternierend der erste oder zweite Empfänger auf Empfangsbereitschaft geschaltet werden.

14. Sichtweitensensor nach einem der Ansprüche 10 oder 12 oder 13, dadurch gekennzeichnet, daß ein zweiter, durch einen zweiten Sendekanal (S2) sendender Sender, sowie ein dritter und ein vierter Empfänger vorgesehen sind, welche durch einen dritten bzw. einen vierten Empfangskanal (E3, E4) rückgestreutes Licht empfangen, wobei die Sender und Empfänger so angeordnet sind, daß der erste und der zweite Sendekanal (S1, S2), der erste und der dritte Empfangskanal (S1, S3) sowie der zweite und der vierte Sendekanal (S2, S4) achsensymmetrisch zueinander angeordnet sind.

15. Sichtweitensensor nach Anspruch 14, dadurch gekennzeichnet, daß die Empfänger mit so ausgerichteten Polarisationsfiltern versehen sind, daß der erste und dritte Empfänger nur Licht mit einer horizontalen Polarisationsebene und der zweite und der vierte Empfänger nur Licht mit einer vertikalen Polarisationsebene oder umgekehrt empfangen, und die Sender linear polarisiertes Licht mit einer definierten Polarisationsebene senden.

16. Sichtweitensensor nach einem der Ansprüche 10 bis 15, dadurch gekennzeichnet, daß jeder Sender eine Laserdiode aufweist, welche monochromatisches Licht mit einer Pulsfrequenz des Lasers von 10 ... 50 kHz aussendet.

## Claims

1. Method for determining the visibility distance in thick fog by means of a lidar, by which a pulsed laser beam is transmitted by means of a first send channel and laser light scattered back by the fog is received by means of a first receiving channel, the first send channel and the first receiving channel being aligned parallel to each other, characterized in that back-scattered laser light is additionally received by the lidar by means of a second receiving channel and this second receiving channel is aligned at a divergent, acute tilt angle to the first send channel, which angle is optimised in such a way that only a small proportion of single-scattered light is received by means of the tilted receiving channel, while the intensity of the double- and more than double-scattered light is high.

2. Method according to Claim 1, characterized in that a second send channel is provided which is aligned parallel to the first send channel.

3. Method according to Claim 1 or 2, characterized in that a third receiving channel is provided which is aligned parallel and axially symmetrically with respect to the first send channel or a notional line extending in the middle between the two send channels, and by means of the first receiving channel only back-scattered light with a first polarisation plane is received, while by means of the third receiving channel only back-scattered light with a second polarisation plane which extends perpendicularly to the first polarisation plane is received, linearly polarised light having a defined polarisation plane being transmitted by means of the send channel or send channels.

4. Method according to Claim 3, characterized in that a fourth receiving channel is provided which is aligned axially symmetrically to the second receiving channel with respect to the first send channel or a notional line extending in the middle between the two send channels.

5. Method according to one of Claims 2 to 4, characterized in that the send and receiving channels are associated with one another by means of a multiplexer.

6. Method according to Claim 4, characterized in that a third and a fourth send channel are provided, each one of the send channels being associated with one of the receiving channels.

7. Method according to one of Claims 1 to 6, characterized in that by means of an evaluation process, back-calculation to extinction is carried out from the lidar signals received, for which purpose a comparison is made between the lidar signal received by means of the first receiving channel and the lidar signal received by means of the second receiving channel, and a ratio is thereby formed between the sum of the intensity of the total back-scattered light and of the double-scattered light.

8. Method according to Claim 4, characterized in that by means of an evaluation process, back-calculation to extinction is carried out from the lidar signals received, for which purpose a ratio is formed between the value of the lidar signal received by means of the first receiving channel and the value of the lidar signal received by means of the second receiving channel, and a ratio is formed between the value of the lidar signal received by means of the third receiving channel and the received by means of the third receiving channel and the value of the lidar signal received by means of the fourth receiving channel.

9. Method according to Claim 4, characterized in that on the basis of the comparison of the values of the lidar signals received, between the first and third and the second and fourth receiving channel, the polarisation plane of the back-scattered light is detected and thus conclusions are drawn as to the type of fog.

10. Visibility distance sensor, which is provided with a lidar with a first transmitter, transmitting by means of a first send channel (S1) and which transmits a pulsed laser beam, and with a first receiver, which receives single-scattered light by means of a first receiving channel (E1), the first send channel (S1) and the first receiving channel (E1) being aligned parallel to one another, characterized in that a second receiver is additionally provided which is so aligned that it receives back-scattered light by means of a second receiving channel (E2) and this second receiving channel (E2) is arranged at a divergent, acute tilt angle to the first send channel (S1), which angle is optimised in such a way that only a small proportion of single-scattered light is received by means of the tilted receiving channel, while the intensity of the double- and more than double- scattered light is high.

11. Visibility distance sensor, which is provided with a lidar with a single transmitter, transmitting by means of a send channel (S1) and which transmits a pulsed laser beam, and with a receiver which receives back-scattered light by means of a first receiving channel (E1), the send channel (S1) and the first receiving channel (E1) being aligned parallel to each other, characterized in that the receiver is movable to and fro between the alignment with the first and with the second receiving channel (E1, E2), and with the last-named alignment it receives back-scattered light by means of the second receiving channel (E2) and this second receiving channel (E2) is aligned at a divergent, acute tilt angle to the first send channel (S1), which angle is optimised in such a way that only a small proportion of single-scattered light is received by means of the tilted receiving channel, while the intensity of the double- and more than double-scattered light is high.

12. Visibility distance sensor according to Claim 10 or 11, characterized in that the acute tilt angle between the first and the second receiving channel is such that double-scattered light is received by the second receiver to over 90%.

13. Visibility distance sensor according to Claim 10 or 12, characterized in that a multiplexer is provided by means of which alternately the first or the second receiver is switched to the ready-to-receive state.

14. Visibility distance sensor according to one of Claims 10, 12 or 13, characterized in that a second transmitter, transmitting by means of a second send channel (S2), is provided, and also a third and a fourth receiver which receive back-scattered light by means of a third or a fourth receiving channel (E3, E4), the transmitters and receivers being so arranged that the first and the second send channel (S1, S2), the first and the third receiving channel (S1, S3) and also the second and the fourth send channel (S2, S4) are arranged axially symmetrically with respect to one another.

15. Visibility distance sensor according to Claim 14, characterized in that the receivers are provided with polarisation filters aligned in such a way that the first and third receivers receive only light with a horizontal polarisation plane and the second and fourth receivers receive only light with a vertical polarisation plane, or vice versa, and the transmitters transmit linearly polarised light with a defined polarisation plane.

16. Visibility distance sensor according to one of Claims 10 to 15, characterized in that each transmitter has a laser diode which transmits monochromatic light having a laser pulse frequency of 10 ... 50 Kilohertz.

## Revendications

1. Procédé de détermination de la visibilité en présence d'un aérosol dense au moyen d'un *lidar,* qui émet, via un premier canal émetteur, un rayon laser pulsé et qui reçoit, via un premier canal récepteur, de la lumière de laser rétrodiffusée par le brouillard, où le premier canal émetteur et le premier canal récepteur sont orientés parallèlement l'un à l'autre, caractérisé en ce que le *lidar* reçoit en outre la lumière de laser rétrodiffusée à travers un deuxième canal récepteur, et en ce que ce deuxième canal récepteur est orienté par rapport au premier canal émetteur selon un angle d'inclinaison divergent aigu, optimisé de manière à ne recevoir, via le canal récepteur incliné, qu'une petite partie de la lumière ayant subi une simple diffusion, alors que l'intensité de lumière ayant subi une double diffusion ou plus d'une double diffusion y est élevée.

2. Procédé selon la revendication 1, caractérisé en ce qu'un deuxième canal émetteur est prévu, qui est orienté parallèlement au premier canal émetteur.

3. Procédé selon la revendication 1 ou 2, caractérisé en ce qu'un troisième canal récepteur est prévu, qui est orienté parallèlement au, et de façon symétrique par rapport à l'axe du premier canal émetteur ou une ligne imaginaire s'étendant au milieu entre les deux canaux émetteurs, et en ce que le premier canal récepteur ne reçoit que de la lumière rétrodiffusée présentant un premier plan de polarisation, alors que le troisième canal récepteur ne reçoit que de la lumière rétrodiffusée présentant un deuxième plan de polarisation qui s'étend perpendiculairement au premier plan de polarisation, la lumière émise via le canal émetteur ou les canaux émetteurs étant de la lumière polarisée rectiligne présentant un plan de polarisation défini.

4. Procédé selon la revendication 3, caractérisé en ce qu'un quatrième canal récepteur est prévu, qui est orienté de façon symétrique par rapport à l'axe du deuxième canal récepteur, par rapport au premier canal émetteur ou une ligne imaginaire s'étendant au milieu entre les deux canaux émetteurs.

5. Procédé selon l'une des revendications 2 à 4, caractérisé en ce que les canaux émetteurs et récepteurs sont associés les uns aux autres au moyen d'un multiplexeur.

6. Procédé selon la revendication 4, caractérisé en ce que des troisième et quatrième canaux émetteurs sont prévus, respectivement un des canaux émetteurs étant associé à l'un des canaux récepteurs.

7. Procédé selon l'une des revendications 1 à 6, caractérisé en ce qu'en mettant en oeuvre un procédé d'analyse, on calcule, à partir des signaux de *lidar* reçus, l'extinction, en établissant une comparaison entre le signal *lidar* reçu via le premier canal récepteur et le signal *lidar* reçu via le deuxième canal récepteur, et en définissant ainsi un rapport entre la somme de l'intensité de l'ensemble de la lumière rétrodiffusée et celle de la lumière ayant subi une double diffusion.

8. Procédé selon la revendication 4, caractérisé en ce qu'en mettant en oeuvre un procédé d'analyse, on calcule, à partir des signaux de *lidar* reçus, l'extinction, en établissant un rapport entre la valeur du signal *lidar* reçu via le premier canal récepteur et la valeur du signal *lidar* reçu via le deuxième canal récepteur, et en établissant un rapport entre la valeur du signal *lidar* reçu via le troisième canal récepteur et la valeur du signal *lidar* reçu via le quatrième canal récepteur.

9. Procédé selon la revendication 4, caractérisé en ce qu'à partir de la comparaison des valeurs des signaux *lidar* reçus, entre les premier et troisième et les deuxième et quatrième canaux récepteurs, on détermine le plan de polarisation de la lumière rétrodiffusée, ce qui permet de tirer des conclusions quant au type de brouillard.

10. Détecteur de visibilité qui est pourvu d'un *lidar* comprenant un premier émetteur émettant via un premier canal émetteur (S1), qui émet un rayon laser pulsé, et un premier récepteur recevant, via un premier canal récepteur (E1), de la lumière ayant subi une simple diffusion, où le premier canal émetteur (S1) et le premier canal récepteur (E1) sont orientés parallèlement l'un à l'autre,
caractérisé en ce qu'en outre, un deuxième récepteur est prévu, qui est orienté de manière telle qu'il reçoive de la lumière rétrodiffusée via un deuxième canal récepteur (E2), et en ce que ce deuxième canal récepteur (E2) est orienté par rapport au premier canal émetteur (S1) selon un angle d'inclinaison aigu divergent optimisé de manière à ne recevoir, via le canal récepteur incliné, qu'une petite partie de la lumière ayant subi une simple diffusion, alors que l'intensité de lumière ayant subi une double diffusion ou plus d'une double diffusion y est élevée.

11. Détecteur de visibilité qui est pourvu d'un *lidar* comprenant un émetteur unique émettant via un canal émetteur (S1), émettant un rayon laser pulsé, et un récepteur qui reçoit, via un premier canal récepteur (E1), de la lumière rétrodiffusée, le canal émetteur (S1) et le premier canal récepteur (E1) étant orientés parallèlement l'un à l'autre,
caractérisé en ce que le récepteur peut être déplacé entre des orientations pointées sur les premier et deuxième canaux récepteurs (E1, E2), recevant, dans le cas de la dernière orientation mentionnée, de la lumière rétrodiffusée via le deuxième canal récepteur (E2), ce deuxième canal récepteur (E2) étant orienté, par rapport au premier canal émetteur (S1), selon un angle aigu divergent optimisé de manière à ne recevoir, via le canal récepteur incliné, qu'une petite partie de la lumière ayant subi une simple diffusion, alors que l'intensité de lumière ayant subi une double diffusion ou plus d'une double diffusion y est élevée.

12. Détecteur de visibilité selon la revendication 10 ou 11, caractérisé en ce que l'angle d'inclinaison aigu existant entre les premier et deuxième canaux récepteurs est calculé de manière telle que le deuxième récepteur reçoive à plus de 90% de la lumière ayant subi une double diffusion.

13. Détecteur de visibilité selon la revendication 10 ou 12, caractérisé en ce qu'un multiplexeur est prévu, au moyen duquel on commute de façon alternée soit le premier, soit le deuxième récepteur en mode de réception.

14. Détecteur de visibilité selon l'une des revendications 10 ou 12 ou 13, caractérisé en ce qu'un deuxième émetteur est prévu, émettant via un deuxième canal émetteur (S2), ainsi qu'un troisième et un quatrième récepteurs , ces récepteurs recevant de la lumière rétrodiffusée via un troisième et un quatrième canal récepteur (E3, E4), les émetteurs et les récepteurs étant disposés les uns par rapport aux autres de manière telle que les premier et deuxième canaux émetteurs (S1, S2), les premier et troisième canaux récepteurs (S1, S3) et les deuxième et quatrième canaux émetteurs (S2, S4) soient disposés de façon symétrique par rapport à leurs axes.

15. Détecteur de visibilité selon la revendication 14, caractérisé en ce que les récepteurs sont dotés de filtres polaroïdes orientés de manière telle que les premier et troisième récepteurs ne reçoivent que de la lumière présentant un plan de polarisation horizontal, et que les deuxième et quatrième récepteurs ne reçoivent que de la lumière présentant un plan de polarisation vertical, ou l'inverse, et que les émetteurs émettent une lumière polarisée rectiligne présentant un plan de polarisation défini.

16. Détecteur de visibilité selon l'une des revendications 10 à 15, caractérisé en ce que chaque émetteur comporte une diode à laser qui émet une lumière monochromatique avec une fréquence pulsative du laser de 10 à 50 kHz.
